Europäisches Patentamt

European Patent Office

Office européen des brevets

(11) Publication number: **0 138 580**
**B1**

# EUROPEAN PATENT SPECIFICATION

(45) Date of publication of patent specification: **25.04.90**

(21) Application number: **84306941.0**

(22) Date of filing: **11.10.84**

(51) Int. Cl.⁵: **G 11 B 5/147,** G 11 B 5/21,
G 11 B 5/235

(54) Alloy magnetic recording head.

(30) Priority: **12.10.83 JP 190102/83**
**06.03.84 JP 41261/84**

(43) Date of publication of application:
**24.04.85 Bulletin 85/17**

(45) Publication of the grant of the patent:
**25.04.90 Bulletin 90/17**

(84) Designated Contracting States:
**DE FR GB**

(56) References cited:
**FR-A-2 373 850**
**FR-A-2 403 615**
**US-A-3 672 045**
**US-A-3 750 274**

**PATENTS ABSTRACTS OF JAPAN, vol. 6, no. 82**
**(P-116)960r, 20th May 1982; & JP - A - 57 18 013**

**PATENTS ABSTRACTS OF JAPAN, vol. 6, no.**
**252 (P-161)1130r, 10th December 1982; & JP - A -**
**57 147 122**

(73) Proprietor: **Matsushita Electric Industrial Co.,**
**Ltd.**
**1006, Oaza Kadoma**
**Kadoma-shi Osaka-fu, 571 (JP)**

(72) Inventor: **Aoki, Masaki**
**7-21, Aogein**
**Mino-shi Osaka-fu 562 (JP)**
Inventor: **Sakai, Masayuki**
**1197-406, Sugou Mihara-cho**
**Minamikawachi-gun Osaka-fu, 587 (JP)**
Inventor: **Torii, Hideo**
**1-chome 13-18, Nishikounoike-cho**
**Higashiosaka-shi, 578 (JP)**
Inventor: **Okinaka, Hideyuki**
**3-15-3, Minamisakurazuka**
**Toyonaka-shi, 560 (JP)**
Inventor: **Hirota, Hozumi**
**90-9, Yatayama-cho**
**Koriyama-shi Nara-ken 639-11 (JP)**

(74) Representative: **Spencer, Graham Easdale et al**
**A.A. Thornton & CO Northumberland House**
**303-306, High Holborn**
**London WC1V 7LE (GB)**

Courier Press, Leamington Spa, England.

# EP  0 138 580  B1

(56) References cited:

PATENTS ABSTRACTS OF JAPAN, vol. 4, no. 90
(P-17)572r, 27th June 1980, page 71 P 17; & JP -
A - 55 52 524

PATENTS ABSTRACTS OF JAPAN, vol. 6, no. 13
(P-99)891r, 26th January 1982; & JP - A - 56 137
517

PATENTS ABSTRACTS OF JAPAN, vol. 6, no.
66(P-112)944r, 27th April 1982; & JP - A - 57 6430

PATENTS ABSTRACTS OF JAPAN, vol. 7, no.
134 (P-203)1279r, 11th June 1983; & JP - A - 58
50 620

PATENTS ABSTRACTS OF JAPAN, vol. 6, no. 92
(P-119)970r, 29th May 1982; & JP - A - 57 27 416

PATENTS ABSTRACTS OF JAPAN, vol. 7, no.
198 (P-220)1343r, 2nd September 1983; & JP - A
- 58 97 120

PATENTS ABSTRACTS OF JAPAN, vol. 1, no.
138, 12th November 1977, page 6711 E 77; & JP -
A - 52 75 419

PATENTS ABSTRACTS OF JAPAN, vol. 6, no. 41
(P-106)919r, 13th March 1982; & JP - A - 56 159
826

PATENTS ABSTRACTS OF JAPAN, vol. 7, no.
152 (P-208)1297r, 5th July 1983; & JP - A - 58 64
619

# EP 0 138 580 B1

**Description**

BACKGROUND OF THE INVENTION

1. Field of the Invention

This invention relates to an alloy magnetic recording head.

2. Description of the Prior Art

Recently, the magnetic recording is now in progress toward high densification. It is necessary for achievement of high density recording to restrict a spread of the magnetic field as much as possible from the viewpoint of record demagnetization. For this purpose, a head construction for better contact between the recording medium and the magnetic head, fine machining of a gap, and high saturation magnetic flux density core material difficult to create magnetic saturation near the core gap (because the use of high coercive force magnetic recording medium is required from the self-demagnetization), have been desired.

Now, a magnetic head has been recognized to be optimum which has a narrow gap of high accuracy and uses an iron (Fe), aluminum (Al) and silicon (Si) series magnetic alloy (for example, Sendust) as a core material for the magnetic head of such high performance, so that popularization of such magnetic head has been desired earnestly in the field of magnetic recording.

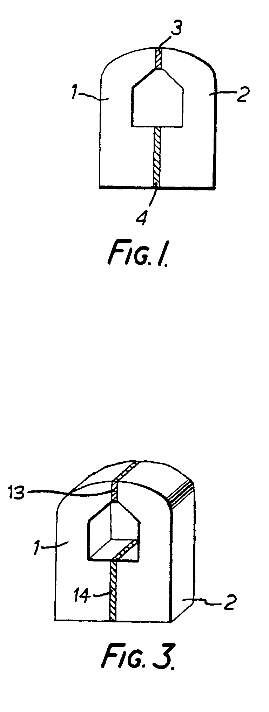

However, it is extremely difficult from the property of the Fe-Al-Si series magnetic alloy used as core material to form at this alloy magnetic head the narrow gap of high accuracy, which has hindered the spread of the aforesaid magnetic head. Next, an example of the conventional method for forming the Fe-Al-Si series magnetic alloy (for example, Sendust) is shown in Fig. 1, in which a quartz ($SiO_2$) film 3 is formed by the sputtering at the gap formation surface (the tape transportation surface) of a core 1 of Fe-Al-Si series magnetic alloy at one side in Fig. 1 and then a core 2 of Fe-Al-Si series magnetic alloy at the other side is stuck with the core 1 by use of silver alloy brazing material 4, for example, silver-copper-cadmium-zinc series alloy, of the low melting point. In this method, however, the Fe-Al-Si series magnetic alloy and quartz ($SiO_2$) used at the front gap forming portion at the tape transportation surface are largely different from each other in the coefficient of thermal expansion (the coefficient of thermal expansion of quartz is 1.7 × $10^{-6}/°C$ and that of Fe-Al-Si alloy, 13.5 × $10^{-6}/°C$), so that the quartz film 3 is peeled off from the Fe-Al-Si series magnetic alloy during the tape transportation so as to cause deterioration of the gap accuracy, in other words, cause a break in the gap forming surface. The silver alloy brazing material 4 for a rear gap at the reverse side to the tape transportation surface generally uses silver-copper-cadmium-zinc series alloy of the low melting point in order to increase a bonding strength with the Fe-Al-Si series magnetic alloy. The brazing material is larger in its coefficient of thermal expansion (about 17—18 × $10^{-6}/°C$) and also larger in the counter diffusion with the Fe-Al-Si series magnetic alloy when both the cores 1 and 2 are bonded, thereby having created a problem in that a crack is developed at the Fe-Al-Si series alloy portion when the melting silver-alloy brazing material is solidified so that, under the influence of the crack, it becomes difficult to obtain control for a gap width and parallelism of the gap surfaces. A magnet head according to the first part of claim 1 is known from FR—A 2403615. According to FR—A—2373850 a silver-copper-pallatium alloy is used for junctioning a pair of Fe-Al-Si alloy core pieces at a front gap and a rear gap.

SUMMARY OF THE INVENTION

An object of the invention is to provide a magnetic head of Fe-Al-Si series magnetic alloy which forms a narrow magnetic gap with high accuracy and enables the formed gap to have high mechanical strength.

The present invention provides an iron-aluminum-silicon (Fe-Al-Si) series magnetic alloy head for a magnetic recording medium, comprising:

a pair of Fe-Al-Si alloy core pieces which respectively have front gap forming surfaces forming therebetween a front gap facing said magnetic recording medium and rear gap forming surfaces forming therebetween a rear gap for junctioning said core pieces:

ceramic films formed respectively on said front gap forming surfaces of said core pieces;

a glass film filling a gap between said ceramic films; and

characterised in that a silver-copper-indium (Ag-Cu-In) series alloy film fills said rear gap.

BRIEF DESCRIPTION OF THE DRAWINGS

Fig. 1 is a sectional view a conventional magnetic head piece of a Fe-Al-Si series magnetic alloy,

Figs. 2-(a) and -(b) are perspective exploded views of embodiments of Fe-Al-Si series magnetic alloy cores of the invention respectively, and

Fig. 3 is a perspective view of embodiment of Fe-Al-Si series magnetic alloy magnetic head pieces of the invention.

DESCRIPTION OF THE PREFERRED EMBODIMENTS

This invention will be detailed in accordance with an embodiment shown in the drawings.

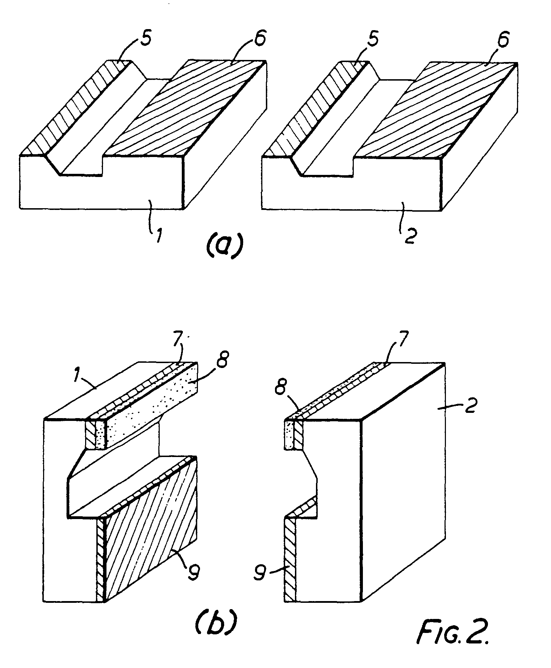

In the embodiment shown in Fig. 2, a pair of boat-like-shaped cores 1 and 2 each comprise a Fe-Al-Si series magnetic alloy of 3 mm in width, 2 mm in height, and 20 mm in length and of a shape as shown in Fig. 2-(a), and are provided with a groove for receiving windings and of 0.35 mm in width and formed by use of a diamond grindstone. The cores 1 and 2 are prepared and the front gap forming surfaces 5 and rear

3

gap forming surfaces 6 are mirror-polished (the maximum surface roughness R max. is 0.10 μm or less with accuracy) respectively.

A zirconium oxide (ZrO$_2$) film 7 is formed by means of sputtering, onto both the junction surfaces corresponding to the front gap as shown in Fig. 2-(b).

On the film 7 is overlapped a glass film 8 (Glass of PbO of 75 wt. %, SiO$_2$ of 20 wt. % and Na$_2$O of (5 wt. %) by sputtering. The rear gap forming surfaces were maksed to be free fro ZrO$_2$ or glass, the zirconium oxide film being 0.15 μm in uniform thickness, the glass film 0.05 μm in uniform thickness.

An Ag-Cu-In series alloy film 9 is formed at each junction surface at the rear gap forming portion by means of sputtering. In this case, the front gap forming surfaces are masked to be free from the Ag-Cu-In series alloy, the Ag-Cu-In film being 0.15 μm in uniform thickness and comprising Ag of 60 wt. %, Cu of 27 wt. % and In of 13 wt. %.

The ZrO$_2$ films and glass films at the front gap side and the Ag-Cu-In film at the rear gap side are allowed to abut at the same kind of films against each other so that the opposite chips at the pair of head pieces of Fe-Al-Si alloy were subjected to the heat treatment in a N$_2$ atmosphere at one air pressure and a temperature of 900°C and the films to be stuck were processed by the diffused junction. The coupled core block is cut into a segment of 500 μm in thickness and subjected to mechanical polishing, thereby having manufactured a leaf-like piece of 150 μm in thickness as shown in Fig. 3.

The head piece of Fe-Al-Si series magnetic alloy film was polished at the front gap and rear gap portions and measured inside by an optical microscope. As a result, it was observed that front and rear gaps each were 0.30 μm in width and parallel to each other in the gap surfaces, and also since the coefficient of thermal expansion of material for forming both the front and rear gaps was about equal to that of Fe-Al-Si series magnetic alloy, no crack has been created at the junction surfaces. Furthermore, in order to examine mechanical strength of the gap formed portions, the Fe-Al-Si series magnetic alloy at both sides of the gap was subjected to the tensile test by stress of 29.4 N/mm$^2$ (3 Kg/mm$^2$), but the junction surfaces were not separated to thereby have found that the cores are superior also in mechanical strength. Furthermore, when the front head was machined to be 25 μm in track width and a magnetic tape (of coercive force H$_c$; 112 kA/m (1400 oersted) and saturation magnetic flux density B$_s$: 0.3T (3000 gauss) was transported through the magnetic head at relative speed of 3.45 m/sec, no break was found at the tap. In addition, when a coil was wound in 25 turns into the groove at the head, reproducing output voltage of the head at 5 MHz was 249 μV (peak to peak).

The results of the above measurement are shown by the specimen No. 7 in the Table.

The specimen Nos. 6 and 8 to 15 in Table 3 show the results after various tests of specimens changed in material of non-magnetic film at the front gap portions and in composition of SiO$_2$-PbO-Na$_2$O series glass.

The specimen Nos. 16 and 17 in the Table show the results after various tests of the specimen treated in vacuum [0.0133Pa (1 × 10$^{-4}$ Torr)].

In addition, in this embodiment, as to composition of Fe-Al-Si series magnetic core piece having influence on the magnetic property, an analysis using an X-ray microanalyzer could confirm that the composition was not at all changed before and after the heat treatment. As a result, the saturation magnetic flux density B$_s$ of Fe-Al-Si series magnetic alloy is 0.865T (8650 gauss); coercive force H$_c$, 2.4 A/M (0.03 oersted); and A.C. initial magnetic permeability μ, 61 (where for 200 mm thickness); and no change of magnetic property by the heat treatment was seen. Also, it could be confirmed that ion of Mg, Al or Zr was not diffused more than 0.01 μm in depth within the Sendust alloy.

As seen from the Table, the SiO$_2$-PbO-Na$_2$O series glass, when in composition of SiO$_2$ of 20 to 80 wt. %, reacted on the ceramic film to form a strong front gap. In a case where an amount of SiO$_2$ is small and that of PbO is extremely larger glass itself is very small in strength so as to cause a breakdown in the gap forming surfaces when the magnetic tape is transported. In a case of a large amount of SiO$_2$, since sufficient softening was not created under the processing condition at a temperature of 900°C, the glass film did not react on the ceramic film, in which the breakdown also occurred when the tape was transported. From the above, it is proper to take SiO$_2$ of 20 to 80 wt. %.

| Specimen No. | Front Gap | | Glass (wt.%) | Film thickness (μm) | Optical Front Gap (μm) | Parallelism and Sendust Junction Surface Condition | Gap Condition when Tape is transported | Reproducing Output Voltage in 5 MHz μV (p-p) |
|---|---|---|---|---|---|---|---|---|
| | Material | Film thickness (μm) | | | | | | |
| 6* | Zirconium oxide | 0.10 | $SiO_2$-PbO-$Na_2O$ (10) (85) (5) | 0.05 | 0.30 | Good | Broken | 205 |
| 7 | " | " | (20) (75) (5) | " | " | " | Good | 249 |
| 8 | " | " | (40) (55) (5) | " | " | " | " | 246 |
| 9 | " | " | (60) (35) (5) | " | " | " | " | 251 |
| 10 | " | " | (80) (15) (5) | " | " | " | " | 249 |
| 11* | " | " | (90) (5) (5) | " | " | " | Broken | 200 |
| 12 | Magnesium oxide | " | (50) (49) (1) | " | " | " | Good | 245 |
| 13 | " | " | (50) (45) (5) | " | " | " | " | 251 |
| 14 | Spinel | " | (50) (40) (10) | " | " | " | " | 249 |
| 15 | " | " | (50) (35) (15) | " | " | " | " | 250 |
| 16** | " | " | (50) (40) (10) | " | " | " | " | 245 |
| 17** | " | " | (50) (35) (15) | " | " | " | " | 248 |

*: Comparison Example
**: Subjected to heat treatment in vacuum (1 × 10⁻⁴ Torr = 0,013 Pa)

EP 0 138 580 B1

As seen from the above description and the Table, the Fe-Al-Si alloy magnetic recording head of the invention forms the non-magnetic ceramic film and glass film, of thickness with high accuracy, at the front gap forming surfaces (magnetic tape transportation surfaces) of pair of Fe-Al-Si alloy chips to be coupled into a form of magnetic head, and forms the silver brazing (Ag-Cu-In series) film at the rear gap forming surfaces, so that while the same kinds of gap forming surfaces are abutting against each other and the pair of Fe-Al-Si core pieces are being held, the core pieces are heat-treated at a temperature higher than that of melting the silver brazing material and glass and in a non-oxidizing atmosphere less than one atmospheric pressure, so that the silver brazing films in abutting against each other and the glass films in abutting against each other, are subjected to diffused junction, thereby enabling strong junction of the Fe-Al-Si series magnetic alloy with each other. Hence, the non-magnetic film and glass film, when formed, are controlled of thickness to facilitate control of gap width, whereby the formation of gap at the Fe-Al-Si series magnetic alloy magnetic head, which has hitherto been considered difficult, has become easy to thereby have facilitated formation of the gap of intensive mechanical strength and high accuracy. Therefore, it becomes easy to manufacture the Fe-Al-Si series magnetic alloy magnetic head having the gap suitable for a high density magnetic recording head. At a rear gap portion containing thin film of silver alloy brazing material with high melting temperature, component elements of said brazing material is diffused in the Fe-Al-Si series magnetic alloy core pieces and therefore pairs of said Fe-Al-Si series magnetic alloy cores are joined with high intensive strength each other. On the other hand, it becomes possible that a bonding at the rear gap has high intensive strength against mechanical stress and the bonding portion of said Fe-Al-Si series magnetic alloy cores (at the rear gap portion) has not any crack after heat treatment for abutting a pair of the cores owing to lack of cadmium (Cd) and zinc (Zn) in said brazing material, which component elements make a melting temperature of the brazing material down and the coefficient of thermal expansion of the brazing material up.

In addition, when the non-magnetic ceramic film is defined to the zirconium oxide, magnesium oxide, and spinel films, these films each have the coefficient of thermal expansion relatively near that of Fe-Al-Si series magnetic alloy (as $ZrO_2$: $10 \times 10^{-6}/°C$, MgO: $12 \times 10^{-6}/°C$, and $MgO.Al_2O_3$: $10 \times 10^{-6}/°C$ and hardness is larger, whereby the gap is difficult to cause a break during the tape transportation.

Also, when the composition of glass is defined to the $SiO_2$-PbO-$Na_2O$ series, since the coefficient of thermal expansion (about $11 \times 10^{-6}/°C$) of the glass coincides well with that of Fe-Al-Si series magnetic alloy, $ZrO_2$, MgO, MgO or $MgO.Al_2O_3$, the magnetic head is difficult to be subjected to thermal distortion, thereby obtaining intensive sticking strength.

Although the glass is herewith defined to the $SiO_2$-PbO-$Na_2O$ series, glass even other than the above, when its coefficient of thermal expansion coincided with that of Fe-Al-Si alloy, $ZrO_2$, MgO or $Mgo.Al_2O_3$, was confirmed to obtain considerably intensive sticking force.

For the heat treatment for welding of Fe-Al-Si series magnetic alloy in the embodiment, the atmosphere may not be defined to $N_2$ or vacuum, but may be effective in all the non-magnetic atmospheres, which has been confirmed.

## Claims

1. An iron-aluminum-silicon (Fe-Al-Si) series magnetic alloy head for a magnetic recording medium, comprising:

a pair of Fe-Al-Si alloy core pieces (1, 2) which respectively have front gap forming surfaces (5) forming therebetween a front gap facing said magnetic recording medium and rear gap forming surfaces (6) forming therebetween a rear gap for junctioning said core pieces (1, 2);

ceramic films (7) formed respectively on said front gap forming surfaces (5) of said core pieces (1, 2);

a glass film (8) filling a gap between said ceramic films (7); and

characterized in that a silver-copper-indium (Ag-Cu-In) series alloy film (9) fills said rear gap.

2. An iron-aluminum-silicon (Fe-Al-Si) series magnetic alloy head according to claim 1, wherein said Ag-Cu-In series alloy film comprises 60 wt. % of silver (Ag), 27 wt. % of copper (Cu) and 13 wt. % of indium (In).

## Patentansprüche

1. Magnetkopf aus einer Legierung der Eisen-Aluminium-Silicium (Fe-Al-Si)-Reihe für ein magnetisches Aufzeichnungsmedium, umfassend:

ein Paar Fe-Al-Si-Legierungskernteile (1, 2), die jeweils einen Frontspalt bildende Oberflächen (5), die zwischen zwischen sich einen dem magnetischen Aufzeichnungsmedium gegenüberliegenden Frontspalt bilden und einen Hinterspalt bildende Oberflächen (6), die zwischen sich einen Hinterspalt bilden zum Verbinden der Kernteile (1, 2) besitzen;

keramische Filme (7), die jeweils auf den einen Frontspalt bildenden Oberflächen (5) der Kernteile (1, 2) gebildet sind;

einen Glasfilm (8), welcher einen Spalt zwischen den keramischen Filmen (7) füllt; und

der dadurch gekennzeichnet ist, daß ein Film (9) aus einer Legierung der Silber-Kupfer-Indium (Ag-Cu-In)-Reihe den Hinterspalt füllt.

2. Magnetkopf aus einer Legierung der Eisen-Aluminium-Silicium (Fe-Al-Si)-Reihe nach Anspruch 1, wobei der Film aus einer Legierung der Ag-Cu-In-Reihe 60 Gew.-% Silber (Ag), 27 Gew.-% Kupfer (Cu) und 13 Gew.-% Indium (In) umfaßt.

**Revendications**

1. Tête en alliage magnétique de la série fer-aluminium-silicium (Fe-Al-Si) pour un support d'enregistrement magnétique, comprenant:

une paire de pièces formant noyau (12) en alliage Fe-Al-Si qui ont respectivement des surfaces formant entrefer avant (5) qui forment entre elles un entrefer avant tourné vers ledit support d'enregistrement magnétique et des surfaces formant entrefer arrière (6) qui forment entre elles un entrefer arrière pour unir lesdites pièces formant noyau (12);

des couches céramiques (7) formées respectivement sur lesdites surfaces formant entrefer avant (5) desdites pièces formant noyau (12);

une couche de verre (8) remplissant un interstice entre lesdites couches céramiques (7);

caractérisé en ce qu'une couche d'alliage (9) de la série argent-cuivre-indium (Ag-Cu-In) remplit ledit entrefer arrière.

2. Tête en alliage magnétique de la série fer-aluminium-silicium (Fe-Al-Si) selon la revendication 1, dans laquelle ladite couche d'alliage de la série Ag-Cu-In comprend 60% en poids d'argent (Ag) 27% en poids de cuivre (Cu) et 13% d'indium (In).

EP 0 138 580 B1

FIG. 1.

FIG. 3.

1

5  6      5  6

(a)

1      2

7      7

1  8      8  2

9      9

(b)      FIG.2.